Europäisches Patentamt

European Patent Office

Office européen des brevets

(19)

(11) Veröffentlichungsnummer: **0 450 604 A1**

## (12) EUROPÄISCHE PATENTANMELDUNG

(21) Anmeldenummer: 91105270.2

(22) Anmeldetag: 03.04.91

(51) Int. Cl.⁵: **A01C 23/04**

(30) Priorität: 05.04.90 DE 4011069

(43) Veröffentlichungstag der Anmeldung:
09.10.91 Patentblatt 91/41

(84) Benannte Vertragsstaaten:
AT BE CH DE DK FR GB IT LI NL SE

(71) Anmelder: Reiber, Konrad
Eurishofen 16
W-8939 Jengen(DE)

(72) Erfinder: Reiber, Konrad
Eurishofen 16
W-8939 Jengen(DE)

(74) Vertreter: Herrmann-Trentepohl, Werner,
Dipl.-Ing. et al
Kirschner, Grosse, Bockhorni Forstenrieder
Allee 59
W-8000 München 71(DE)

(54) **Vorrichtung zum An- und Abkoppeln eines Saugrohres an den Füllstutzen eines Fassbehälters.**

(57) Zum Automatisieren des Vorganges des An- und Abkoppelns eines Saugrohres für pumpbare Medien, insbesondere für Gülle, an den Füllstutzen eines mobilen Faßbehälters wird eine Vorrichtung vorgeschlagen, die eine Saugrohrhaltevorrichtung umfaßt, in welcher eine Saugrohr (1) von einer definierten Neutralposition ausgehend verschiebbar aufgehängt ist. Eine Aufnahme- und Führungsvorrichtung (11), die wenigstens einen Schwenkarm und eine Schwenkachse aufweist, welche in einer festgelegten Position relativ zum Füllstutzen (15) angeordnet ist, wird durch ein Stellglied (12) hochgefahren, wobei sie das hängende Saugrohr aufnimmt und an den Füllstutzen heranführt. Gestartet wird dieser Vorgang durch Schalten einer Betätigungsvorrichtung. Über eine mit dem Stellglied verbundene Steuervorrichtung (14) werden weitere Funktionselemente, wie beispielsweise ein Füllstutzenverschluß (15), ein Entlüftungsventil und dergleichen in Abhängigkeit vom Arbeitszustand der Vorrichtung betätigt. Durch die erfindungsgemäße Vorrichtung wird ein häufig zu wiederholender Vorgang automatisiert.

FIG. 2

Die vorliegende Erfindung betrifft eine Vorrichtung zum An- und Abkoppeln eines Saugrohres für pumpbare Medien, insbesondere für Gülle, an den Füllstutzen eines mobilen Faßbehälters, gemäß Oberbegriff des Patentanspruches 1.

Zum Ausbringen von Gülle auf dem Feld werden sogenannte Faßbehälter verwendet, die in an sich bekannter Weise längliche, zylinderförmige Behälter sind, die auf einem von einem Fahrzeug, insbesondere Traktor gezogenen Wagen befestigt sind und einen Füllstutzen und einen Verteilerausguß aufweisen.

Zum Befüllen dieser Faßbehälter wird der Faßbehälter vor das Saugrohr in der Güllegrube vorgefahren. Dort wird das Saugrohr von der Bedienperson an den Füllstutzen herangeführt und befestigt. Es wird dann die Verschlußklappe am Füllstutzen geöffnet und das am Faßbehälter angeordnete Entlüftungsventil geschlossen. Dann wird eine Saugpumpe in Betrieb gesetzt, so daß durch den im Faßbehälter entstehenden Unterdruck Gülle in diese eingesaugt wird. Nach Befüllen des Faßbehälters wird die Pumpe abgeschaltet, die Verschlußklappe am Füllstutzen geschlossen, das Entlüftungsventil geöffnet und das Saugrohr wieder vom Füllstutzen entfernt. Dieser Vorgang wird saisonbedingt mehrfach täglich durchgeführt, was einen entsprechenden Arbeitsaufwand mit sich bringt.

Der Erfindung liegt die Aufgabe zugrunde, eine einfach und robust aufgebaute sowie leicht bedienbare Vorrichtung zum An- und Abkoppeln eines Saugrohres für pumpbare Medien, insbesondere für Gülle, an den Füllstutzen eines mobilen Faßbehälters bereitzustellen, mit welcher der obenbeschriebene Füllvorgang erleichtert und schneller durchgeführt werden kann.

Diese Aufgabe wird durch die kennzeichnenden Merkmale des Patentanspruches 1 gelöst. Weitere vorteilhafte Ausgestaltungen sind in den Unteransprüchen gekennzeichnet.

Erfindungsgemäß umfaßt die Vorrichtung zum An- und Abkoppeln eine Saugrohrhaltevorrichtung, in welcher das Saugrohr in allen Richtungen frei innerhalb vorgegebener Grenzen verschiebbar angeordnet ist. Die Position, die das Saugrohr infolge seiner Anordnung immer wieder einnimmt, beschreibt eine fest definierte Neutralposition. In einer vorteilhaften Ausgestaltung kann diese Saugrohrhaltevorrichtung ein Gestell aufweisen, in welchem das Saugrohr an seinem freien Ende mit einer Kette oder ähnlichem aufgehängt ist. Es ist so sowohl in seiner Längsals auch seiner Querrichtung frei beweglich. Vorteilhafterweise kann das Gestell ein Rahmen sein, dessen oberer Balken Befestigungselemente für die Seil- oder Kettenenden aufweist. Weiterhin kann in einer vorteilhaften Ausgestaltung das Saugrohr nahe seinem freien Ende einen an ihm angeordneten Ring aufweisen, durch welchen das Seil oder die Kette zum Abhängen geführt ist. Das Saugrohr befindet sich also leicht beweglich in einer definierten Position.

Erfindungsgemäß ist eine Aufnahme- und Führungsvorrichtung zum Aufnehmen des freien Saugrohrendes und zum Zuführen zum Füllstutzen in einer relativ zum Füllstutzen festgelegten Position angeordnet. Diese Aufnahme- und Führungsvorrichtung weist wenigstens einen Schwenkarm und eine Schwenkachse auf, wobei gemäß einer vorteilhaften Ausgestaltung der Schwenkarm an seinem Ende im wesentlichen U-förmig ausgebildet ist.

Mit besonderem Vorteil wird die gesamte Aufnahme- und Führungsvorrichtung im wesentlichen U-förmig ausgebildet, wobei die beiden freien Schenkel zum Aufnehmen und Führen des Saugrohres und der Verbindungsschenkel als Schwenkachse angeordnet sind. Gemäß einer vorteilhaften Ausgestaltung sind die beiden freien Schenkel zum Aufnehmen und Führen des Saugrohres zu ihrem freien Ende hin gabelförmig auseinandergebogen, so daß die Aufnahme- und Führungsvorrichtung eine Schwenkachse mit konisch auseinanderlaufenden Zentrierschenkeln bildet. Damit kann in besonderer vorteilhafter Weise das Saugrohr in eine zur Schwenkachse festgelegt zentrierten Position geführt werden.

Dies wird nach einer weiteren vorteilhaften Ausgestaltung dadurch unterstützt, daß an dem freien Ende des Saugrohres Verbreiterungselemente angeordnet sind, so daß die gabelförmige Aufnahme- und Führungsvorrichtung hinter diese Verbreiterungselemente greifen kann. Gemäß einer vorteilhaften Ausgestaltung sind diese Verbreiterungselemente durch zwei in der gleichen Ebene und senkrecht zur Saugrohrmittelachse angeordnete Bolzen gebildet.

Somit wird also, wenn der Faßbehälter vor das Saugrohr in der Güllegrube vorgefahren wurde, dieser so positioniert, daß die Aufnahme- und Führungsvorrichtung, die ja eine festgelegte Position zum Füllstutzen hat, so vor das frei hängende Saugrohrende positioniert ist, daß diese beim Verschwenken das Saugrohrende aufnehmen und führen kann. Das Saugrohrende wird durch die Aufnahme- und Führungsachse in eine bestimmte Position geführt und bei weiterem Verschwenken an den Füllstutzen heran und in diesen herein gedrückt. Erfindungsgemäß wird die Verschwenkarbeit durch ein Stellglied durchgeführt, welches die Aufnahme- und Führungsvorrichtung zum An- und Abkoppeln des Saugrohres antreibt. In vorteilhafter Ausgestaltung ist das Stellglied ein hydraulisch oder pneumatisch betätigbarer Zylinder, der gemäß einer weiteren vorteilhaften Ausgestaltung über Seilführungen, Ketten, Gestänge oder entsprechende Übertragungsmittel auf die Aufnahme- und Führungsvorrichtung einwirkt. Dabei genügt ein einseitig arbeitendes Zylinderaggregat, da die Absenkbewegung der Gabel schwerkraftsbedingt erfolgen kann.

Gestartet wird der Zylinder erfindungsgemäß durch eine Betätigungsvorrichtung, die in einer vorteilhaften Ausgestaltung der Erfindung ein Schalter ist, der den Druck auf den Zylinder zu- oder abschaltet.

Über Betätigungsmittel wird erfindungsgemäß eine Steuervorrichtung durch den Zylinder betrieben, mit welcher Funktionselemente, wie insbesondere ein Füllstutzenverschluß, ein Entlüftungsventil, ein Saug-/Druckkompressor und dergleichen betätigt werden.

Gemäß einer vorteilhaften Ausgestaltung der vorliegenden Erfindung ist die Steuervorrichtung aus zusammenwirkenden Schaltnocken und Schalteranordnungen bildet. Gemäß einer weiteren vorteilhaften Ausgestaltung der vorliegenden Erfindung ist die Steuervorrichtung ein um eine Achse drehbares, mit Anschlägen zusammenwirkendes Schaltrad. Dies hat den Vorteil, besonderer Unanfälligkeit im Dauerbetrieb.

Gemäß einer vorteilhaften Ausgestaltung der Erfindung ist der Saug-/Druckkompressor von dem Saug- in den Druckbetrieb und umgekehrt durch die Steuervorrichtung umschaltbar.

Gemäß einer vorteilhaften Ausgestaltung der Erfindung ist eine Abschaltvorrichtung vorgesehen, die füllstandsabhängig den Kompressor abschaltet. Dies hat den Vorteil, daß ein Überlauf vermieden wird.

Gemäß einer weiteren vorteilhaften Ausgestaltung der Erfindung ist eine Verriegelungsvorrichtung angeordnet, die nach Abkoppeln des Saugrohres vom Füllstutzen die Aufnahme- und Führungsvorrichtung verriegelt, so daß diese im folgenden nicht beschädigt werden kann.

Erfindungsgemäß ist nur ein vorzugsweise hydraulisch betätigbarer Zylinder erforderlich, um die Aufnahmegabel zum Ankoppeln des Saugrohrs hochzufahren und hierbei den Füllstutzen durch Hochfahren der Füllstutzenklappe zu öffnen, den Kompressor auf Saug- oder Druckbetrieb und umgekehrt zu schalten, die Gabel abzusenken und die Füllstutzenklappe in Verschlußstellung zu fahren, wobei zweckmäßigerweise selbsttätig ein Entlüftungsventil über die Füllstutzenklappe betätigt wird. Erreicht wird dies zweckmäßigerweise unter Zwischenschaltung eines Schaltrads, welches schwenkbar auf einem mit dem Zylinderkolben verfahrbaren Rahmen angeordnet ist. Dieses Schaltrad wirkt gegen einen feststehend angeordneten Federstahl, so daß mit Herabfahren des Rahmens durch den Zylinder das Schaltrad infolge Zusammendrückens des Federstahls in eine andere Schaltstellung geschwenkt wird.

Ausführungsbeispiele der Erfindung sowie ihr funktionales Zusammenwirken ergeben sich aus der folgenden Beschreibung anhand der Figuren. Dabei zeigen:

Figur 1    ein schematisches Ausführungsbeispiel für eine Saugrohrhaltevorrichtung sowie für am freien Saugrohrende angeordnete Verbreiterungselemente;

Figur 2    eine schematische Ansicht der Funktionselemente der erfindungsgemäßen Vorrichtung und deren Zusammenwirken; und

Figur 3    ein Ausführungsbeispiel für eine Steuervorrichtung sowie

Figur 4    eine Ansicht des am Füllstutzen angeordneten Füllstutzenverschlusses.

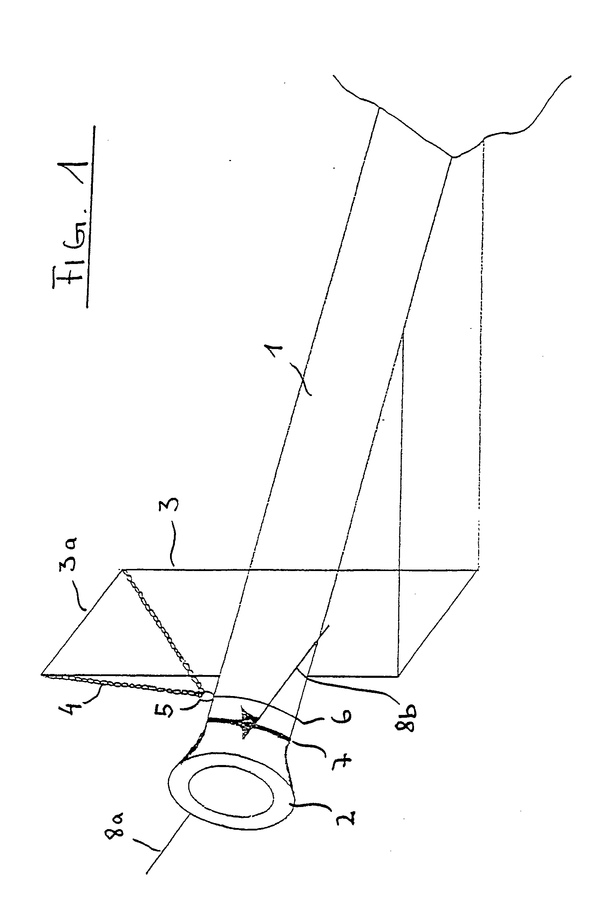

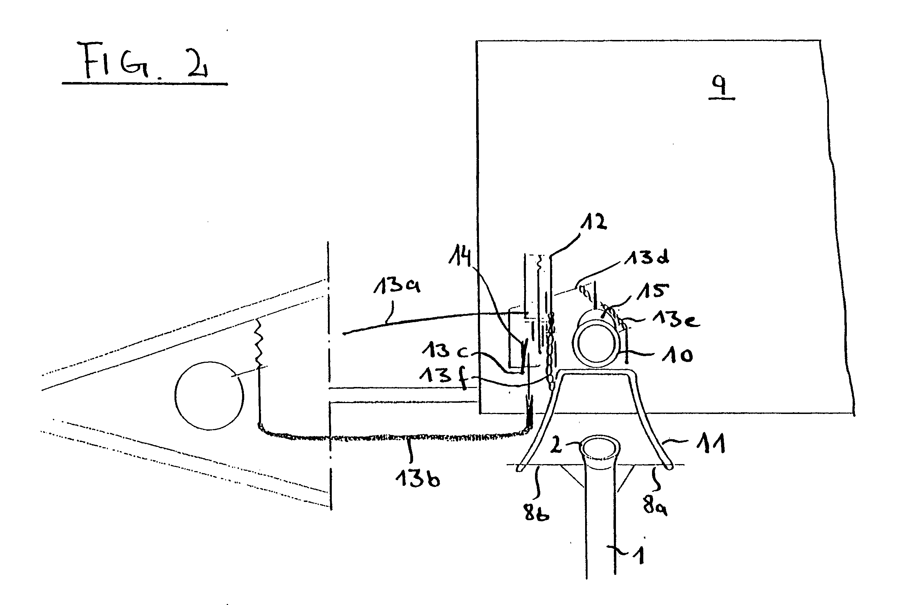

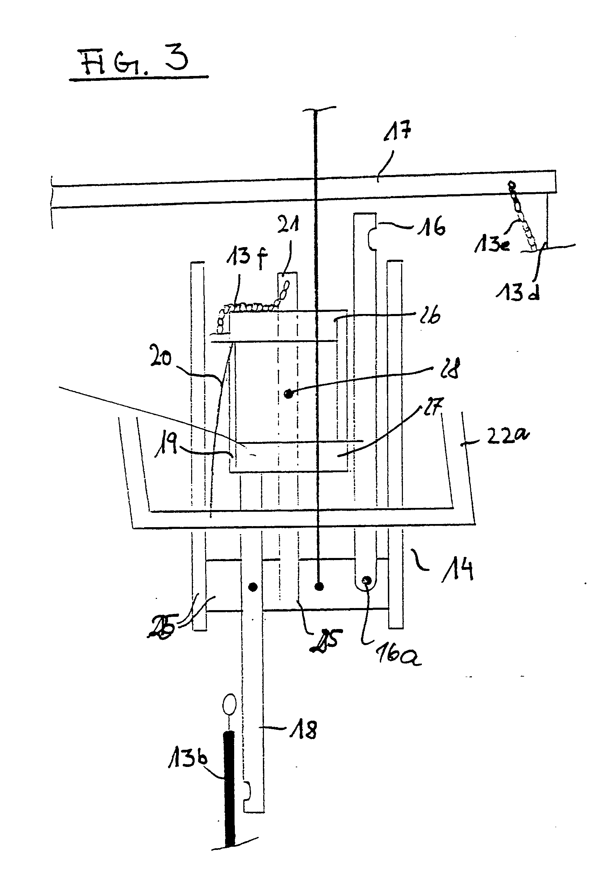

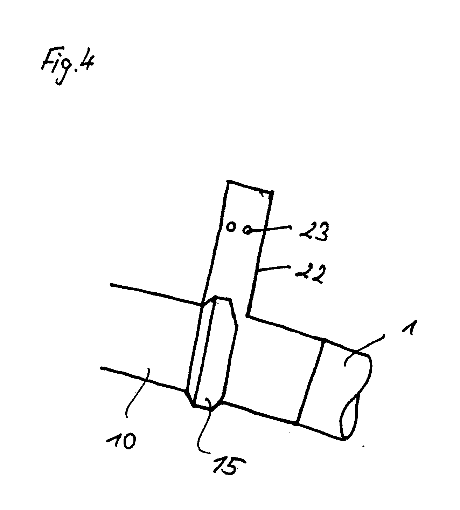

Figur 1 zeigt das freie Ende eines Saugrohres 1, welches an seinem Ende in an sich bekannter Weise eine sich konisch verbreiternde Abschlußmanschette 2 aufweist. Dieses Saugrohr 1 ist durch einen Rahmen hindurchgeführt, welcher nur schematisch dargestellt und mit dem Bezugszeichen 3 bezeichnet ist. Bei diesem Rahmen kann es sich um ein entsprechend stabil ausgelegtes Gestell handeln, oder es kann vorhandene Infrastruktur verwendet werden. An dem oberen Balken 3a des Gestells sind, wie gezeigt in den Eckpunkten, die Enden der Kette 4 befestigt, die durch einen Ring 5 durchgeführt ist, welcher nahe dem Saugrohrende beispielsweise mittels einem das Saugrohr umfassenden Ring 6 befestigt ist. Durch diese Art der Aufhängung ist eine dreidimensionale Bewegung des Saugrohrs innerhalb des Gestells möglich.

Das andere Ende des Saugrohres befindet sich in nicht gezeigter aber an sich bekannter Weise in der Gülle.

Weiterhin weist das Saugrohrende zwei senkrecht zur Mittelachse des Rohres stehende Bolzen 8a und 8b auf, die im dargestellten Ausführungsbeispiel an einem Ring 7 am Saugrohrende befestigt sind. Durch an die Bolzen angreifende Kräfte kann das Saugrohrende sowohl durch die Pendelmöglichkeiten der Kette in Längsrichtung als auch durch das Verschieben der Kette durch den Ring in seiner Querrichtung bewegt werden. Ansonsten hängt das Saugrohrende bei nicht angreifenden Kräften in einer definierten Neutralposition.

In Figur 2 ist schematisch dargestellt, wie die Vorrichtung zusammenwirkt, nachdem ein landwirtschaftlicher Faßbehälter, insbesondere Güllefaßwagen, vor das Saugrohrende vorgefahren wurde. Hierbei wird der Faßbehälter so vor das Saugrohrende gefahren, daß diesem der Füllstutzen im wesentlichen gegenüberliegt und zwar in einer Entfernung, die durch die Vorrichtung überbrückt werden kann und die Freiheitsgrade, die dem Rohr durch die Saugrohrhaltevorrichtung ermöglicht werden, nicht überschreitet.

In dem in Figur 2 gezeigten Ausführungsbeispiel ist an dem Faßbehälter 9 der Füllstutzen 10 angeordnet. In einer zum Füllstutzen festgelegten Relativposition ist die Aufnahme- und Führungsvorrichtung 11 befestigt. Weiterhin ist faßbehälterseitig ein Zylinder 12, Betätigungsmittel 13a bis 13f sowie eine Steuervorrichtung 14 angeordnet. Nach dem Vorfahren des Faßbehälters 9 in der obenbeschriebenen Weise kann die Bedienperson, die üblicherweise auch der Traktorfahrer ist, mit einem Betätigungsmittel die Betätigungsvorrichtung schalten, die ein Schalter sein kann, durch welchen Druck auf den Zylinder zugeschaltet wird.

Der Einfachheit halber wird zunächst von folgendem Betriebszustand ausgegangen:
Der Zylinder 12 befindet sich in einer Endstellung, die Aufnahme- und Führungsvorrichtung 11 befindet sich in ihrer abgeklappten Position, die Füllstutzenverschlußklappe 15 befindet sich in ihrer geschlossenen Position, ein nicht gezeigtes Entlüftungsventil befindet sich in der geöffneten Position, und ein nicht gezeigter Saug-/Druckkompressor befindet sich in seiner Druckstellung.

Der Zylinder 12 wird nach Schalten der Betätigungsvorrichtung über ein Betätigungselement 13a druckabhängig von einer Endstellung in die andere Endstellung geführt, wodurch zunächst die Aufnahme- und Führungsvorrichtung angehoben wird. Diese Aufnahme- und Führungsvorrichtung 11 ist in Form einer Gabel mit konisch nach außen sich erweiternden Gabelschenkeln gezeigt, deren Drehachse in einer festen Position zum Füllstutzen angeordnet ist. Die sich hebende Gabel 11 hinterfängt die Bolzen 8a und 8b am Saugrohrende und zentriert das Rohr 1 automatisch mit zunehmenden Ansteigen. Mit weiterem Ansteigen wird das Saugrohrende 2 an den Füllstutzen 10 heran und in diesen eingeführt. Der Zylinder 12 betätigt bei Erreichen seiner zweiten Endstellung die Steuervorrichtung 14, durch welche Betätigungsmittel so gesteuert werden, daß die Füllstutzenverschlußklappe 15 geöffnet, ein nicht gezeigtes Entlüftungsventil geschlossen, und ein nicht gezeigter Kompressor in Saugbetrieb umgeschaltet und anschließend gestartet wird.

Der Ankoppelvorgang ist damit im wesentlichen abgeschlossen und es beginnt nun das Ansaugen von Gülle in den Faßbehälter in bekannter Weise.

Es ist anzumerken, daß die Verbindung der einzelnen Funktionselemente über die Steuervorrichtung nur beispielhaft gewählt ist. Es ist beispielsweise möglich und vor allem zweckmäßig, das Entlüftungsventil direkt mit der Füllstutzenverschlußklappe zu koppeln usw..

In Abhängigkeit des Füllstandes kann nun die Betätigungsvorrichtung automatisch oder wiederholt durch die Bedienperson über entsprechende Betätigungsmittel geschaltet werden, so daß der Druck auf den Zylinder 12 abgeschaltet wird. Gleichzeitig wird der Kompressor abgeschaltet, das Entlüftungsventil geöffnet und die Füllstutzenverschlußklappe 15 geschlossen. Zweckmäßigerweise erfolgt hierbei zugleich die Entlüftung des noch angekoppelten Saugrohrs, und zwar selbsttätig, indem entsprechend Fig. 4 im Klappengehäuse 22 angeordnete und durch die eingefahrene Klappe 15 geschlossene Entlüftungsöffnungen 23 mit Ausfahren der Klappe 15 in die Schließstellung freigegeben und über einen Entlüftungskanal 24 an der außenseitigen Fläche der Klappe die Entlüftung erfolgt. Das Verschließen der Verschlußklappe 15 kann beispielsweise durch reine Schwerkraft erfolgen. Ebenso kann die Aufnahme- und Führungsvorrichtung 11 entweder durch gesteuerten Druck oder einfach durch Schwerkraft herunterfallen. Dies wird noch begünstigt durch das ebenfalls herunterdrückende Saugrohr 1. Dabei wird, im Falle der Nutzung der Schwerkraft, der Zylinder 12 wieder in seine ursprüngliche Position gefahren, wodurch die Steuervorrichtung ein Umschalten des Kompressors in den Druckbetrieb, jedoch kein Anschalten, vornimmt. Zweckmäßigerweise beinhaltet der Zylinder eine Feder, die beim Hochfahren vorgespannt wird und somit für ein Herabfahren der Vorrichtung 11 sorgt.

Im wesentlichen ist nun der Abkoppelvorgang abgeschlossen. Es besteht nun selbstverständlich die Möglichkeit, ein Hochfahren der Aufnahme- und Führungsvorrichtung 11 und ein Verriegeln derselben in einer festen Position durchzuführen, was zweckmäßig ist. Durch Anschalten des Kompressors würde nun die Gülle aus dem Faßbehälter unter Druck herausbefördert und verteilt. Wenn die Aufnahme- und Führungsvorrichtung 11 in beschriebener jedoch nicht gezeigter Weise in einer bestimmten Position verriegelt wird, so muß vor dem obenbeschriebenen Ankoppelvorgang ein Entriegeln und Herunterfahren derselben durchgeführt werden. Weiterhin ist die Bezeichnung Endstellung für die Zylinderposition nur beispielhaft, es kann sich selbstverständlich auch um entsprechende Zwischenpositionen handeln.

Das Umschalten des Kompressors in den jeweiligen Schaltbetrieb kann beispielsweise mechanisch durch einen Bowdenzug 13 oder in sonstiger angemessener Form erfolgen. Zweckmäßigerweise erfolgt dies mit dem Hochfahren der Vorrichtung 11 in Transportstellung, wobei in Endstellung der Bowdenzug betätigt wird und den Kompressor von Saugauf Druckbetrieb umschaltet.

Eine entsprechende Steuervorrichtung ist schematisch in Figur 3 gezeigt.

In schematischer Darstellung besteht die Steuervorrichtung 14 aus einen Rahmen, der aus Rahmenelementen 25 gebildet ist und mit dem Zylinder in Verbindung steht. An den Rahmenelementen 25 ist ein Schieberelement 21 angeordnet, mit welchem über eine nur schematisch angedeutete Kette 13f die Aufnahme- und Führungsvorrichtung betätigt wird, wenn der Zylinder bzw. dessen Kolben hochfährt. Weiterhin sind an den Rahmenteilen 25 Mitnehmerelemente angeordnet. Das Mitnehmerelement 16 dient dazu, den Hebelarm 17 zu betätigen, an welchem die Kette 13e, beispielsweise für ein nicht gezeigtes Entlüftungsventil, das Seil 13d, beispielsweise für den Füllstutzenverschluß und dergleichen befestigt sind. Wenn der Zylinder bzw. dessen Kolben hochfährt, gelangt der Hebel 16 außer Eingriff mit dem Bügel 22a und klappt um ein unteres Gelenk 16a, so daß er auf den Hebelarm 17 wirkt und somit die Füllstutzenklappe 15 öffnet und das Entlüftungsventil schließt. Weiterhin ist an den Rahmenteilen 15 im unteren Bereich ein Mitnehmer 18 angeordnet, welcher zur Betätigung des Bowdenzuges 13b zum Umschalten des Kompressors in obenbeschriebener Weise dient. Ein Positionsschalter 19 (auch Schaltrad genannt) ist zentral derart angeordnet, daß er in zwei Positionen fahrbar ist, wobei eine Blattfeder 20 für dessen Arretierung sorgt. Das heißt, beim Hochfahren des Rahmens durch den Zylinder, um das Saugrohr anzukoppeln, befindet sich der Positionsschalter in einer Stellung, in der der Mitnehmer durch den Positionsschalter (Schaltrad) gesperrt und das Mitnehmerelement 16 freigegeben ist, so daß er in die oben beschriebene Wirkstellung mit dem Hebel 17 schwenken kann. Mit Herabfahren des Rahmens durch den Zylinder wird der Hebel 17 durch den Mitnehmer zum Schließen der Füllstutzenklappe 15 zurückgeführt und wird das Schaltrad entgegen des Federstahls 20 geschaltet, wobei diese neue Schaltstellung wiederum durch den Federstahl 20 fixiert ist. In der neuen Schaltstellung ist nun der Mitnehmer 16 gesperrt, so daß er bei erneutem Hochfahren nicht in Wirkstellung gelangt, hingegen ist nun der Mitnehmer 18 entriegelt. Beim erneuten Hochfahren, um die Gabel 11 in Transportstellung zu bringen, schnappt der Mitnehmer 18 den Bowdenring 13b, so daß der Kompressor von Saug- auf Druckbetrieb umgeschaltet wird. Mit Herabfahren des Zylinders nach Entleeren der Gülle, um die Gabel in die Aufnahmestellung für das Saugrohr zu bringen, wird der Bowdenzug betätigt und erfolgt die Umschaltung von Druck auf Saugbetrieb. Ferner wird mit Herabfahren des Zylinders das Schaltrad geschaltet und der Mitnehmer 18 verriegelt und der Mitnehmer 16 entriegelt.

Alle Hebel und Schalter lassen sich in gezeigter Weise über einen Fixierrahmen wieder in ihre Neutralposition bewegen, wobei dieser Fixierrahmen letztlich über die Blattfeder 20 auf den Positionsschalter 19 wirkt. Der Vorteil ist, daß die Bedienperson sämtliche Steuervorgänge vom Fahrersitz aus betätigen kann, so daß für den Füllvorgang das Fahrzeug nicht verlassen werden muß.

Der als Schaltrad ausgebildete Positionsschalter 19 ist durch ein im wesentlichen viereckiges Rahmenelement mit zwei parallelen Querbalken 26 und 27 gebildet und an dem mit dem Zylinder verfahrbaren Rahmen 25 bei 28 schwenkbar verbunden. In der Darstellung nach Figur 3 befindet sich die Blattfeder 20 in Eingriffstellung mit dem Querbalken 26. Wird das Rahmenelement 25 heruntergefahren, so wird die Blattfeder 20 zusammengedrückt und nach Erreichen einer bestimmten Spannung erfolgt ein Verdrehen des Schaltrads in Uhrzeigerrichtung, wodurch beispielsweise dann der Mitnehmer 18 freigegeben, also entriegelt und der Mitnehmer 16 gesperrt ist. In dieser Sperrstellung kann beim Hochfahren des Rahmens der Mitnehmer 16 nicht den Hebel 17 betätigen und damit erfolgt kein Betätigen der Füllstutzenklappe 15. Hingegen wird beim Hochfahren des Rahmens 25 der Mitnehmer 18 den Bowdenzug 13b betätigen und damit den Kompressor von Saug- auf Druckbetrieb umschalten. Mit Herabfahren des Rahmens 25 erfolgt dann wieder ein Umschalten des Bowdenzugs, wobei ferner dann auch das Schaltrad wieder geschaltet wird, so daß der Mitnehmer 18 gesperrt und der Mitnehmer 16 freigegeben ist.

Figur 4 zeigt das am Füllstutzen vorgesehene Gehäuse 22 für die Füllstutzenklappe 15. Das Gehäuse 22 weist ein oder mehrere Entlüftungsbohrungen 23 auf, die in Öffnungsstellung der Klappe 15, also bei in das Gehäuse 22 eingefahrener Klappe 15, überdeckt sind, so daß keine Entlüftung erfolgt. Wird die Klappe 15 entsprechend der Darstellung in Figur 4 in den Füllstutzen ausgefahren, so schließt die linke Seite der Klappe 15 den Füllstutzen, wohingegen ein mit 24 angedeuteter Spalt über die Entlüftungsöffnungen 23 für eine Entlüftung des angekoppelten Saugrohrs 1 sorgt.

**Patentansprüche**

1. Vorrichtung zum An- und Abkoppeln eines Saugrohres für pumpbare Medien, insbesondere für Gülle, an den Füllstutzen eines mobilen mit einem Saug-/Druckkompressor ausgerüsteten Faßbehälters, gekennzeichnet durch
   - eine Saugrohrhaltevorrichtung (3), in welcher das Saugrohr (1) von einer definierten Neutralposition ausgehend verschiebbar angeordnet ist,
   - eine Aufnahme- und Führungsvorrichtung (11) zum Aufnehmen des freien Saugrohrendes und Zuführen zum Füllstutzen (10), die wenigstens einen Schwenkarm und eine Schwenkachse aufweist,
   - ein Stellglied (12), in Art eines hydraulisch oder pneumatisch betätigbaren Zylinders, welches die Aufnahme- und Führungsvorrichtung (11) zum An- oder Abkoppeln des Saugrohres (1) antreibt,
- eine Betätigungsvorrichtung, und
- eine Steuervorrichtung (14), mit welcher Funktions-elemente wie insbesondere ein Füllstutzenverschluß (15) und/oder ein Entlüftungsventil des Faßbehälters (9) und dergleichen in Abhängigkeit vom Arbeitszustand der Vorrichtung betätigt werden.

2. Vorrichtung nach Anspruch 1, **dadurch gekennzeichnet,** daß die Saugrohrhaltevorrichtung ein Gestell (3) aufweist, an welchem das Saugrohr an seinem freien Ende mit einer Kette (4) oder ähnlichem derart aufgehängt ist, daß es in seiner Längs- und seiner Querrichtung bewegbar ist.

3. Vorrichtung nach einem der Ansprüche 1 bis 3, **dadurch gekennzeichnet,** daß am Saugrohr (1) nahe seinem freien Ende ein Ring (5) angeordnet ist, durch welchen das Seil oder die Kette (4) zum Abhängen geführt ist.

4. Vorrichtung nach einem der vorhergehenden Ansprüche, **dadurch gekennzeichnet,** daß der Schwenkarm der Aufnahme- und Führungsvorrichtung (11) als zweischenkelige Gabel im wesentlichen U-förmig ausgebildet ist, wobei sich die Gabelschenkel nach außen konisch zum Zwecke der Zentrierung des Saugrohrs erweitern oder gabelförmig auseinandergebogen sind.

5. Vorrichtung nach einem der vorhergehenden Ansprüche, **dadurch gekennzeichnet,** daß an dem freien Ende des Saugrohres Verbreiterungselemente (7, 8a, 8b) zur Aufnahme und Führung des Saugrohres (1) durch die Gabel angeordnet sind, die vorzugsweise durch zwei in der gleichen Ebene und senkrecht zur Saugrohrmittelachse angeordnete Bolzen (8a, 8b) gebildet sind.

6. Vorrichtung nach einem der vorhergehenden Ansprüche, **dadurch gekennzeichnet,** daß der Zylinder (12) des Stellglieds über Seilführungen, Ketten, Gestänge oder entsprechende Übertragungsmittel (13a, 13b, 13c, 13d, 13e, 13f) auf die Aufnahme- und Führungsvorrichtung (11) und die Steuervorrichtung (14) einwirkt.

7. Vorrichtung nach einem der vorhergehenden Ansprüche, **dadurch gekennzeichnet,** daß die Steuervorrichtung (14) aus zusammenwirkenden Schaltnocken-/Schalteranordnungen gebildet ist. gebildet ist.

8. Vorrichtung nach einem der vorhergehenden Ansprüche, **dadurch gekennzeichnet,** daß die Steuervorrichtung ein um eine Achse drehbares, mit Anschlägen zusammenwirkendes Schaltrad (19) ist.

9. Vorrichtung nach einem der vorhergehenden Ansprüche, **dadurch gekennzeichnet,** daß das Schaltrad (19) durch eine Stahlfeder (20) in seinen Schaltpositionen vorgespannt und vorzugsweise aus einem viereckigen Rahmenelement mit zwei Querbalken (26, 27) gebildet ist, mit denen die Stahlfeder (20) zusammenwirkt und durch die je nach Schaltstellung der Mitnehmer (16) für die Betätigung der Füllstützenklappe (15) und des Entlüftungsventils verriegelt oder entriegelt und der Mitnehmer (18) zum Zwecke der Betätigung eines Bowdenzugs (13b) zum Schalten des Kompressors auf Saug- oder Druckbetrieb entriegelt oder verriegelt ist, wobei das Rahmenelement an dem durch den Zylinder verfahrbaren Rahmen (25) schwenkbar (bei 28) angeordnet ist.

10. Vorrichtung nach einem der vorhergehenden Ansprüche, **dadurch gekennzeichnet,** daß die Füllstutzenklappe (15) in ihrer Öffnungsstellung einen Entlüftungsschlitz oder Entlüftungsöffnungen (23) überdeckt (Schließen eines Entlüftungsventils) und in ihrer Verschlußstellung im Füllstutzen den Entlüftungsschlitz oder die Entlüftungsöffnungen (23) zum angekoppelten Saugrohr hin freigibt.

11. Vorrichtung nach einem der vorhergehenden Ansprüche, **dadurch gekennzeichnet,** daß die Betätigung der Füllstutzenklappe (15), des Entlüftungsventils, die Umschaltung des Kompressors von Saug- in den Druckbetrieb und umgekehrt sowie das Anheben und Absenken der Gabel (11) zum Zwecke der Ankopplung des Saugrohrs (1) durch einen Zylinder (12) erfolgt, der vorzugsweise als einseitig wirkender Zylinder ausgebildet ist, dessen Kolben durch eine Feder spannbar ist.

FIG. 1

8a

4

3a

5

3

2 7 6

8b

1

EP 0 450 604 A1

FiG. 2

FIG. 3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y,A | DE-U-8 531 204 (K. MERK)<br>* Seite 10, letzter Absatz - Seite 13, Absatz 1; Ansprüche ; Figuren *<br>– – – | 1,4,6,2,3, 5,7,9-11 | A 01 C 23/04 |
| Y,A | FR-A-2 549 030 (A. ROLLAND)<br>* Figur 2 *<br>– – – | 2,1 | |
| A | DE-U-8 904 705 (J. FLIEGL)<br>* Seite 8, Zeile 4; Figuren 3, 4 *<br>– – – – – | 1,2 | |

| | |
|---|---|
| | RECHERCHIERTE SACHGEBIETE (Int. Cl.5)<br><br>A 01 C |

Der vorliegende Recherchenbericht wurde für alle Patentansprüche erstellt

| Recherchenort | Abschlußdatum der Recherche | Prüfer |
|---|---|---|
| Berlin | 02 Juli 91 | MERCKX A M |